(19) **Europäisches Patentamt**
**European Patent Office**
**Office européen des brevets**

(11) **EP 4 268 602 A1**

(12) **EUROPEAN PATENT APPLICATION**
published in accordance with Art. 153(4) EPC

(43) Date of publication:
**01.11.2023 Bulletin 2023/44**

(21) Application number: **21911011.1**

(22) Date of filing: **23.12.2021**

(51) International Patent Classification (IPC):
*A23J 3/14* (2006.01)          *A23L 2/00* (2006.01)
*A23L 2/52* (2006.01)          *A23L 2/38* (2021.01)

(52) Cooperative Patent Classification (CPC):
**A23J 3/14; A23L 2/00; A23L 2/38; A23L 2/52**

(86) International application number:
**PCT/JP2021/048039**

(87) International publication number:
**WO 2022/138872 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.12.2020   JP 2020215857**

(71) Applicants:
• **Amano Enzyme Inc.**
  **Nagoya-shi**
  **Aichi 460-8630 (JP)**

• **Amano Enzyme Asia Pacific Co., Ltd.**
  **Pathum Thani 12120 (TH)**
• **Amano Enzyme Europe Ltd.**
  **OX14 4SH (GB)**

(72) Inventors:
• **NAKNUKOOL, Supaporn**
  **Thani 12120 (TH)**
• **FUJIOKA, Hiroki**
  **Abingdon, Oxfordshire, OX14 4SH (GB)**

(74) Representative: **Müller-Boré & Partner**
**Patentanwälte PartG mbB**
**Friedenheimer Brücke 21**
**80639 München (DE)**

(54) **METHOD FOR PRODUCING RICE PROTEIN-CONTAINING LIQUID COMPOSITION**

(57)    The purpose of the present invention is to provide a technique for producing a rice protein-containing liquid composition having improved smoothness. The rice protein-containing liquid composition, obtained by a method which is for producing a rice protein-containing liquid composition and comprises a step for treating a rice protein- containing liquid material with a protein deamidase, has improved smoothness.

EP 4 268 602 A1

**Description**

TECHNICAL FIELD

The present invention relates to a method for producing a rice protein-containing liquid composition.

BACKGROUND ART

Plant protein beverages that are rich in nutrients and have a long shelf life have been increasingly popular as alternatives to animal milks for various reasons such as the health boom, countermeasures against allergy problems, religious reasons, and increased opportunities for staying home accompanying the spread of the infectious disease in recent years.

Rice milk is attracting attention as a "third milk" following cow's milk and soy milk. Rice milk is a milk-form beverage obtained by saccharifying rice with an enzyme, koji, or the like and further adding a plant oil, salt, and the like to adjust the texture and/or taste. As a technique related to a method for producing rice milk, Patent Document 1 discloses a drink composition obtained from brown rice as a raw material by adding protease, cellulase, pectinase, and amylase to brown rice to perform a decomposition treatment, and Patent Document 2 discloses a rice saccharified liquid having an amino acid concentration of 0.12 to 0.45 mass%.

PRIOR ART DOCUMENTS

PATENT DOCUMENTS

Patent Document 1: Japanese Patent Laid-open Publication No. H5-137545
Patent Document 2: Japanese Patent Laid-open Publication No. 2014-180249

SUMMARY OF THE INVENTION

PROBLEMS TO BE SOLVED BY THE INVENTION

Rice milk is commercially available, but there is room for improvement in terms of lack of smoothness. This point can be confirmed by the rough texture that is felt by the tongue when it is put in the mouth, and more specifically, the point can be confirmed by the large coefficient of friction measured using an apparatus simulating the inside of the oral cavity with an artificial tongue and artificial saliva. An object of the present invention is therefore to provide a technique for producing a rice protein-containing liquid composition having improved smoothness.

MEANS FOR SOLVING THE PROBLEM

The present inventors have found that it is possible to improve the smoothness of a resulting rice protein-containing liquid composition by treating a rice protein-containing liquid material with a protein deamidase. The present invention has been completed by further conducting studies based on these findings.

That is, the present invention provides the invention of the following aspects.

Item 1. A method for producing a rice protein-containing liquid composition, including a step of treating a rice protein-containing liquid material with a protein deamidase.

Item 2. The method according to item 1, in which the rice protein-containing liquid material is an aqueous dispersion of crushed rice.

Item 3. The method according to item 1 or 2, not including a step of treating with a saccharifying enzyme.

Item 4. The method according to any one of items 1 to 3, not including a fermentation step.

Item 5. A smoothness improver for a liquid composition containing a rice protein, containing a protein deamidase.

Item 6. A viscosifier for a liquid composition containing a rice protein, containing a protein deamidase.

Item 7. A rice odor reducer for a liquid composition containing a rice protein, containing a protein deamidase.

ADVANTAGES OF THE INVENTION

The present invention provides a technique for producing a rice protein-containing liquid composition having improved smoothness.

BRIEF DESCRIPTION OF THE DRAWINGS

Fig. 1 shows measurement results of coefficients of friction of rice protein-containing liquid compositions prepared in Test Example 1.
Fig. 2 is an appearance photograph of rice protein-containing liquid compositions prepared in Test Example 3.

EMBODIMENT OF THE INVENTION

1. Method for Producing Rice Protein-Containing Liquid Composition

A method for producing a rice protein-containing liquid composition of the present invention is characterized by including a step of treating a rice protein-containing liquid material with a protein deamidase. The method for producing a rice protein-containing liquid composition of the present invention will be described below in detail.

1-1. Rice Protein-Containing Liquid Material

The rice protein-containing liquid material used in the present invention is not limited as long as it is a liquid composition obtained using rice as a raw material. Examples of the rice include brown rice, partially milled rice, germinated brown rice, rice with the germ, and white rice.

Specific examples of the rice protein-containing liquid material include a liquid (hereinafter also referred to as an "aqueous dispersion of crushed rice") in which crushed rice is dispersed in water. The crushing of the rice can be performed by any method such as frictional crushing and compressive crushing. The aqueous dispersion of crushed rice can be prepared by crushing the rice in water or by dispersing the crushed rice in water.

Another specific example of the rice protein-containing liquid material is a product treated with a saccharifying enzyme or a fermented product of the aqueous dispersion of crushed rice. Examples of the saccharifying enzyme to be used for the preparation of the product treated with a saccharifying enzyme include α-amylase and glucoamylase. In addition, examples of microorganisms used for the preparation of the fermented product include filamentous fungi such as koji mold, yeast, and lactic acid bacteria.

Still another specific example of the rice protein-containing liquid material is a product obtained by adding an oil and fat, a seasoning, and/or another additive to the aqueous dispersion of crushed rice or the product treated with a saccharifying enzyme or fermented product. Examples of the oil and fat include plant oils such as rice bran oil and sunflower oil. Examples of the seasoning include salt. Examples of the additive include emulsifiers, thickeners, and minerals.

Among the rice protein-containing liquid materials, an aqueous dispersion of crushed rice that has not been subjected to a saccharification treatment or a fermentation treatment is preferable from the viewpoint of enhancing the viscosity of the resulting rice protein-containing liquid composition. In addition, since the production method of the present invention can enhance the viscosity of the resulting rice protein-containing liquid composition, the rice protein-containing liquid material may not contain an oil and fat, or a thickener. In addition, since the production method of the present invention can enhance the smoothness of the resulting rice protein-containing liquid composition, the rice protein-containing liquid material may not contain an emulsifier.

1-2. Protein Deamidase

It is possible to improve the smoothness of the resulting liquid composition containing a rice protein by allowing a protein deamidase to act on the rice protein-containing liquid material. In addition, in an embodiment of the present invention, by allowing the protein deamidase to act on the rice protein-containing liquid material, the viscosity of the resulting liquid composition containing a rice protein can be enhanced, and/or the rice odor thereof can be reduced.

The protein deamidase used in the present invention is an enzyme that exhibits an action of decomposing an amide group-containing side chain of a protein without cleavage of a peptide bond or crosslinking of the protein, and the type, origin, and the like of the enzyme are not particularly limited. In addition, as long as the above action is the main activity, the enzyme may further have an action of decomposing an amide group-containing side chain of a protein accompanied by cleavage of a peptide bond and crosslinking of the protein.

Examples of the protein deamidase include an enzyme (such as protein-glutaminase) that deamidates a glutamine residue in a protein to convert the residue into glutamic acid and an enzyme (such as protein-asparaginase) that deamidates an asparagine residue in a protein to convert the residue into aspartic acid.

More specific examples of the protein deamidase include protein deamidases derived from the genus Chryseobacterium, the genus Flavobacterium, the genus Empedobacter, the genus Sphingobacterium, the genus Aureobacterium or the genus Myroides, the genus Luteimicrobium, the genus Agromyces, the genus Microbacterium, or the genus Leifsonia. These protein deamidases are known, and for example, JP 2000-50887 A, JP 2001-218590 A, WO 2006/075772 A1, WO 2015/133590, and the like can be referred to. These protein deamidases may be used one kind singly or in combination of two or more kinds thereof.

Among these protein deamidases, a protein deamidase derived from the genus Chryseobacterium, more preferably protein-glutaminase derived from the genus Chryseobacterium, still more preferably protein-glutaminase derived from the species Chryseobacterium proteolyticum, and still more preferably protein-glutaminase derived from Chryseobacterium proteolyticum strain 9670 are mentioned from the viewpoint of further improving the smoothness of the resulting rice protein-containing liquid composition, or in addition thereto, enhancing the viscosity and/or reducing the rice odor.

The protein deamidase can be prepared from a culture solution of a microorganism from which the above protein deamidase is derived. Specific examples of the preparation method include a method of collecting a protein deamidase from a culture solution or bacterial cells of the above microorganism. For example, in the case of using a microorganism that secretes protein deamidase, the enzyme can be separated and/or purified after collecting bacterial cells from the culture solution in advance by filtration, centrifugation, or the like as necessary. In addition, in the case of using a microorganism that does not secrete protein-deamidase, it is possible to collect the bacterial cells from the culture solution in advance as necessary, then disrupt the bacterial cells by a pressurization treatment, ultrasonic treatment, lytic enzyme treatment, or the like to expose the enzyme, and then separate and/or purify the enzyme. As a method for separating and/or purifying the enzyme, a known method for separating and/or purifying a protein can be used without particular limitation, and examples thereof include a centrifugal separation method, a UF concentration method, a saltingout method, and various chromatography methods using an ion exchange resin or the like. The separated and/or purified enzyme can be pulverized by a drying method such as freeze drying and reduced pressure drying or can also be pulverized using an appropriate excipient and/or drying aid in the drying method. The separated and/or purified enzyme can also be liquefied by adding an appropriate additive and subjecting the mixture to filtration sterilization.

A commercially available product can also be used as the protein deamidase, and examples of a preferable commercially available product include protein-glutaminase "Amano" 500 (derived from the species Chryseobacterium proteolyticum) manufactured by Amano Enzyme Inc.

The amount of the protein deamidase to be used is not particularly limited, and examples of the amount to be used per 1 g of the rice protein include 0.1 U or more, 0.5 U or more, and 1 U or more. From the viewpoint of further improving the smoothness of the resulting rice protein-containing liquid composition, or in addition, from the viewpoint of enhancing the viscosity and/or reducing the rice odor, the amount of the protein deamidase used per 1 g of the rice protein is preferably 2 U or more, 4 U or more, or 5 U or more, more preferably 7 U or more, 8 U or more, or 10 U or more, still more preferably 14 U or more. The upper limit of the range of the amount of the protein deamidase used per 1 g of the rice protein is not particularly limited, but examples thereof include 200 U or less, 150 U or less, 100 U or less, 75 U or less, 50 U or less, 30 U or less, and 20 U or less.

For the activity of the protein deamidase, the amount of the enzyme liberating 1 $\mu$mol of ammonia per minute from benzyloxycarbonyl-L-glutaminylglycine (Z-Gln-Gly) as a substrate is defined as 1 unit (1 U).

1-3. Reaction Conditions etc.

The temperature at which the rice protein-containing liquid material is treated with the protein deamidase is not particularly limited and can be appropriately determined by those skilled in the art according to the optimal temperature of the enzyme to be used and the like, and examples thereof include 40 to 98°C.

In the production method of the present invention, in the step of treating the rice protein-containing liquid material with the protein deamidase, the liquid material may be treated at substantially a single temperature (within set temperature $\pm4$°C, preferably $\pm2$°C, more preferably $\pm1$°C) within the above temperature range or may be treated by successively increasing the set temperature within the above temperature range.

Specifically, in the case where the treatment is performed at substantially a single temperature, the set temperature is, for example, 40 to 98°C, preferably 43 to 75°C, more preferably 46 to 60°C, still more preferably 48 to 55°C.

In addition, in the case of successively increasing the temperature in the treatment, examples of a mode of setting the temperature include (i-1) a mode in which the temperature is set in 2 stages, in which preferably the difference between the set temperature in the first stage and the set temperature in the second stage is set to, for example, 30 to 50°C, preferably 35 to 49°C, more preferably 40 to 48°C, still more preferably 43 to 47°C; and (i-2) a mode in which the temperature is set in 3 stages, in which preferably the difference between the set temperature in the first stage and the set temperature in the second stage is set to, for example, 20 to 30°C, preferably 23 to 27°C, and the difference between the set temperature in the second stage and the set temperature in the third stage is set to, for example, 5 to 15°C, preferably 8 to 12°C. More specifically, examples include (ii-1) a mode in which the temperature is set in 2 stages, in which the set temperature in the first stage is, for example, 40 to 75°C, preferably 44 to 60°C, more preferably 48 to 55°C, and the set temperature in the second stage is, for example, more than 80°C and 98°C, preferably 83 to 98°C; and (ii-2) a mode in which the temperature is set in 3 stages, in which the set temperature in the first stage is, for example, 40 to 60°C, preferably 44 to 58°C, more preferably 48 to 55°C, the set temperature in the second stage is, for example, 60 to 77°C, preferably 70 to 77°C, more preferably 73 to 77°C, and the set temperature in the third stage is, for example, 83 to 98°C.

The enzyme treatment reaction time of the rice protein-containing liquid material is not particularly limited but may be appropriately determined according to the preparation scale, set temperature, temperature set mode, and the like of the liquid material. The reaction time is, for example, 30 minutes or more, preferably 40 minutes or more, and the upper limit thereof is, for example, 20 hours or less or 17 hours or less.

1-4. Other Steps

The production method of the present invention can include an optional step in addition to the step of treating with the protein deamidase described above.

Examples of the other steps include a step of treating with a saccharifying enzyme and a fermentation step, which are performed in an arbitrary stage, and a cooling step and a step of blending an additive, which are performed after the step of treating with a protein deamidase described above.

Among the other steps described above, from the viewpoint of enhancing the viscosity of the resulting rice protein-containing liquid composition, the step of treating with a saccharifying enzyme and the fermentation step are preferably not included. Here, examples of the saccharifying enzyme used in the step of treating with a saccharifying enzyme include α-amylase and glucoamylase, and examples of the microorganism used in the fermentation step include filamentous fungi such as koji mold, yeast, and lactic acid bacteria.

2. Smoothness Improver for Liquid Composition Containing Rice Protein

As described above, the protein deamidase can improve the smoothness of the liquid composition containing a rice protein. The present invention therefore also provides a smoothness improver for a liquid composition containing a rice protein, the smoothness improver containing a protein deamidase.

The improvement in smoothness can be confirmed by a decrease in the coefficient of friction obtained when the coefficient of friction of the liquid composition containing a rice protein is measured using an apparatus simulating the inside of the oral cavity with an artificial tongue and artificial saliva. It can be sensorily confirmed by feeling a smoother feel in the tongue when the liquid composition containing a rice protein is contained in the mouth.

In the above smoothness improver, the kinds of components to be used, the amounts thereof to be used, and the like are as described in the section of "1. Method for Producing Rice Protein-Containing Liquid Composition" above.

3. Viscosifier and Rice Odor Reducer for Liquid Composition Containing Rice Protein

As described above, in an embodiment of the present invention, the protein deamidase can enhance the viscosity and/or reduce the rice odor of the liquid composition containing a rice protein. Accordingly, the present invention also provides a viscosifier for a liquid composition containing a rice protein, the viscosifier containing a protein deamidase, and a rice odor reducer for a liquid composition containing a rice protein, the rice odor reducer containing a protein deamidase.

In the above viscosifier and the rice odor reducer, the kinds of components to be used, the amounts thereof to be used, and the like are as described in the section of "1. Method for Producing Rice Protein-Containing Liquid Composition" above.

EXAMPLES

The present invention will be specifically described below with reference to examples, but the present invention is not to be construed as being limited to the following examples.

[Enzyme Used]

- PG (Protein-glutaminase "Amano" 500): protein-glutaminase derived from Chryseobacterium proteolyticum
- E5NC (Kleistase E5NC): α-amylase derived from Bacillus amyloliquefaciens

[Method for Measuring Enzyme Activity]

(1) Method for Measuring Protein Deamidase Activity

To 1 mL of a 0.2-M phosphate buffer (pH 6.5) containing 30 mM of Z-Gln-Gly, 0.1 mL of a sample solution containing a protein deamidase was added, the mixture was allowed to stand at 37°C for 10 minutes, and then 1 mL of a 0.4-M TCA solution was added to stop the reaction. As a blank, to 1 mL of a 0.2-M phosphate buffer (pH 6.5) containing 30 mM of Z-Gln-Gly, 1 mL of a 0.4-M TCA reagent solution was added, 0.1 mL of a sample solution containing a protein deamidase was further added, and the mixture was allowed to stand at 37°C for 10 minutes.

The amount of ammonia generated in the reaction solution was measured using Ammonia Test Wako (FUJIFILM Wako Pure Chemical Corporation). The ammonia concentration in the reaction solution was determined from a calibration curve representing the relationship between the ammonia concentration and the absorbance (630 nm) prepared using an ammonia standard solution (ammonium chloride).

The activity of the protein deamidase was calculated from the following formula regarding the amount of the enzyme that produces 1 $\mu$mol of ammonia per minute as 1 unit (1 U). In the formula, the reaction solution amount is 2.1, the enzyme solution amount is 0.1, and Df is a dilution factor of the enzyme solution. Further, 17.03 is the molecular weight of ammonia.

[Math. 1]

$$\text{Protein deamidase activity (U/mL)} = \text{ammonia concentration in reaction solution}$$

$$(\text{mg/L}) \times (1/17.03) \times (\text{reaction solution amount/enzyme solution amount}) \times (1/10) \times \text{Df}$$

(2) Method for Measuring $\alpha$-Amylase Activity

After 10 mL of a 1% potato starch substrate solution (0.1 mol/L acetic acid (pH 5.0)) was heated at 37°C for 10 minutes, 1 mL of a sample solution containing $\alpha$-amylase was then added, and the mixture was immediately shaken. This solution was left standing at 37°C for 10 minutes, then 1 mL of this solution was added to 10 mL of a 0.1-mol/L hydrochloric acid reagent solution, and the mixture was immediately shaken. Next, 0.5 mL of this solution was weighed, and 10 mL of a 0.0002-mol/L iodine reagent solution (Japanese Pharmacopoeia) was added thereto. The mixture was shaken, and then the absorbance (AT) at a wavelength of 660 nm was measured using water as a control. Separately, 1 mL of water was added instead of the sample solution, the same operation was carried out in the same manner, and the absorbance (AB) was measured. The amount of the enzyme at which the coloration of potato starch caused by iodine was reduced by 10% per minute was defined as 1 unit (1 U).

[Math. 2]

$$\alpha\text{-Amylase activity (U/g, U/mL)} = (\text{AB} - \text{AT})/\text{AB} \times 1/\text{W}$$

AT: absorbance of reaction solution
AB: absorbance of blank solution
W: amount of sample in 1 mL of sample solution (g or mL)

[Test Example 1]

Rice milk (Rice drink (Alnatura Produktions- und Handels GmbH)) having the composition shown in Table 1 was used as the rice protein-containing liquid material.

[Table 1]

| Rice drink (Alnatura Produktions- und Handels GmbH) | | |
|---|---|---|
| Raw material | Water | |
| | Rice | (14%) |
| | Sunflower oil | |
| | Salt | |
| Nutrient component | Rice protein | 0.50% |
| | Fat | 1.10% |
| | Carbohydrate | 9.90% |
| | Dietary fiber | 0.50% |
| In the table, % represents w/w%. | | |

To the rice milk, protein-glutaminase (PG) was added in an amount of 5 U per 1 g of the rice protein, and the mixture was treated at 50°C for 30 minutes and then at 95°C for 10 minutes to provide a rice protein-containing liquid composition (Rice treated: Example 1). For comparison, the same operation was performed except that PG was not used to provide a rice protein-containing liquid composition (Rice control: Comparative Example 1).

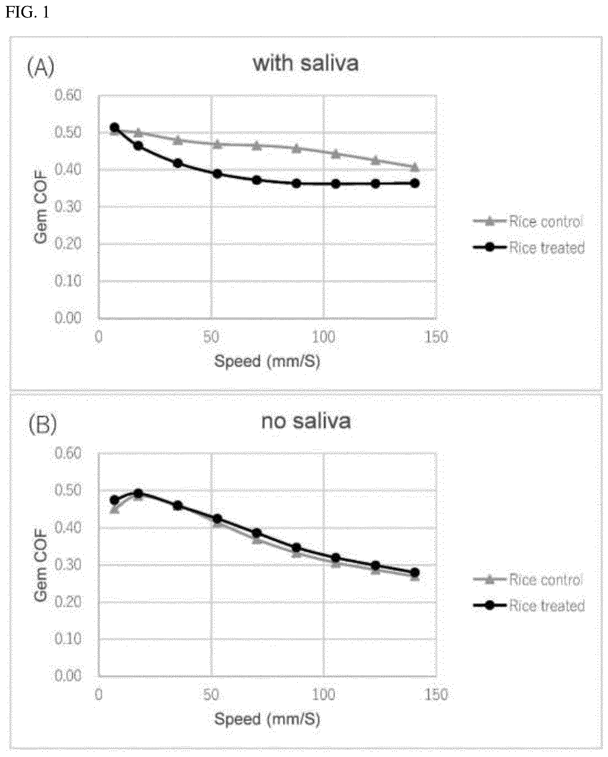

The coefficients of friction of the 2 obtained rice protein-containing liquid compositions were measured using an artificial tongue and artificial saliva (solution of pH 6.7 containing 50 U/ml of $\alpha$-amylase, 25.7 mM of NaCl, 8.6 mM of $K_2HPO_4$, 4.7 mM of $Na_2CO_3$, and 2% (w/w) of mucin; manufactured by Sigma-Aldrich Corporation). Specifically, with a mixture of 200 $\mu$L of the rice protein-containing liquid composition and the artificial saliva interposed between the artificial tongue (made of silicone resin) and an artificial palate (made of polydimethylsiloxane), the artificial tongue was slid with a load of 0.5 N on the artificial palate to measure the coefficient of friction on the artificial tongue (with saliva). The results are shown in Fig. 1(A). Fig. 1(B) shows the results of measurement in the same manner except that no artificial saliva was used (no saliva). In these drawings, the vertical axis represents the coefficient of friction, and the horizontal axis represents the speed at which the artificial tongue slides.

As shown in Fig. 1, the rice protein-containing liquid composition (Rice treated) of Example 1 was found to have a reduced coefficient of friction in an environment simulating the inside of the oral cavity in which saliva is present, as compared with the rice protein-containing liquid composition (Rice control) of Comparative Example 1.

Furthermore, the two obtained rice protein-containing liquid compositions were put in the mouth to evaluate the feeling to the tongue. As a result, it was confirmed that the rice protein-containing liquid composition (Rice treated) of Example 1 obtained using PG was significantly smoother than the rice protein-containing liquid composition (Rice control) of Comparative Example 1.

[Test Example 2]

Rice milk (4Care Balance Rice drink (4Care Co., Ltd.)) having the composition shown in Table 2 was used as the rice protein-containing liquid material. In Table 2, jasmine brown rice is brown rice. This liquid material had not been subjected to either the saccharifying enzyme treatment or the fermentation treatment.

[Table 2]

| 4 Care Balance Rice drink (4 Care Co., Ltd.) | | |
|---|---|---|
| Raw material | Water | |
| | Jasmine brown rice | |
| | Sunflower oil | (1.75%) |
| | Calcium derived from Lithothamnion seaweed | (0.15%) |
| | Lecithin | |
| | Salt | |
| | Gellan gum | |

(continued)

| 4 Care Balance Rice drink (4 Care Co., Ltd.) | | |
|---|---|---|
| Nutrient component | Protein | < 1% (about 0.6%) |
| | Fat | 6% |
| | Carbohydrate | 2.50% |
| | Fiber | < 0.5% |
| In the table, % represents w/w%. | | |

PG was added to the rice milk in an amount of 9 U per 1 g of the rice protein, and the mixture was then treated at 50°C for 4 hours to provide a rice protein-containing liquid composition (Example 2). For comparison, the same operation was performed except that PG was not used to provide a rice protein-containing liquid composition (Comparative Example 2).

The two obtained rice protein-containing liquid compositions were put in the mouth, and smoothness, viscosity, and rice odor of the raw material were sensory evaluated. As a result, as compared with the rice protein-containing liquid composition of Comparative Example 2, the rice protein-containing liquid composition of Example 2 had remarkably improved smoothness, an enhanced viscosity to give a good body, and reduced rice odor.

[Test Example 3]

To 200 g of rice, 400 mL of water was added, the rice was immersed for 2 hours, and then the water was drained. To 50 g of the immersed rice (white rice), 200 mL of water was added, and the mixture was homogenized at 16,400 rpm for 2 minutes to provide an aqueous dispersion of crushed rice (rice protein-containing liquid material). This liquid material had not been subjected to either the saccharifying enzyme treatment or the fermentation treatment.

The aqueous dispersion of crushed rice was treated with (or without) the enzyme shown in Table 3. Specifically, in Comparative Example 3, the aqueous dispersion of crushed rice was heated at 50°C for 1 hour, then at 75°C for 1 hour, and further at 85°C for 15 hours to provide a rice protein-containing liquid composition. In Comparative Example 4, a rice protein-containing liquid composition was provided by heating at 50°C for 1 hour, then adding $\alpha$-amylase, treating at 75°C for 1 hour, and then heating at 85°C for 15 hours. In Example 3, a rice protein-containing liquid composition was provided by adding PG, treating at 50°C for 1 hour, then heating at 75°C for 1 hour, and then heating at 85°C for 15 hours. In Example 4, a rice protein-containing liquid composition was provided by adding $\alpha$-amylase, treating at 75°C for 1 hour, then adding PG, treating at 50°C for 1 hour, and then heating at 85°C for 15 hours.

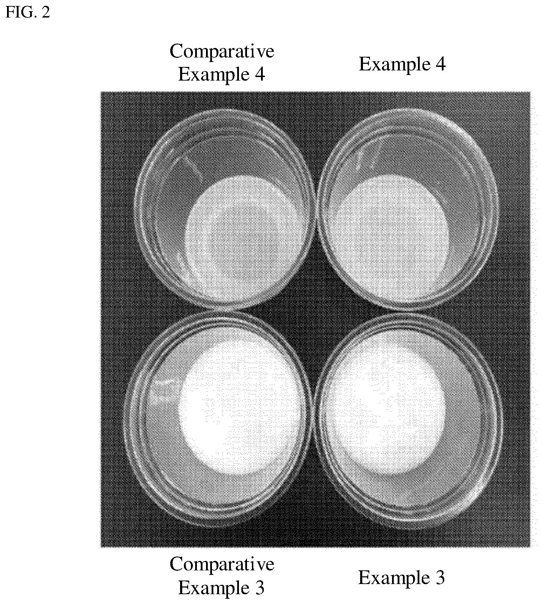

For each of the four obtained rice protein-containing liquid compositions, the soluble protein concentration was measured based on the BCA method, and the smoothness improving property, viscosity enhancing property, and rice odor suppressing property were sensory evaluated based on the following criteria. The results are shown in Table 3. In addition, the 4 obtained rice protein-containing liquid compositions were each put into a transparent cup having about 15 ml and a bottom diameter of 4 cm, and a photograph of the appearance of the rice protein-containing liquid compositions taken from the cup opening is shown in Fig. 2.

<Smoothness Improving Property>

××: Roughness is strongly felt
×: Roughness is felt
△: Roughness is slightly felt
O: Smoothness is felt

<Viscosity Enhancing Property>

××: Since the viscosity is too low, the texture is too thin
×: The viscosity is low
△: The viscosity is slightly low

O: The viscosity becomes high to give a good body
⊙: The viscosity is so high as to form a gel, and a strong body is given.

<Rice Odor Suppressing Property>

××: Rice odor is strongly felt
×: Rice odor is felt
△: Rice odor is slightly felt
O: Only very weak rice odor is felt

[Table 3]

| | Enzyme used | Amount of enzyme used | Soluble protein concentration (mg/mL) | Smoothness improving property | Viscosity enhancing property | Rice odor suppressing property |
|---|---|---|---|---|---|---|
| Comparative Example 3 | - | - | 0.5 | × × | × | × × |
| Comparative Example 4 | E5NC | 13.5 U/1 g of starch | 12.9 | × | × × | × |
| Example 3 | PG | 15 U/1 g of rice protein | 1.1 | ○ | ⊙ | ○ |
| Example 4 | E5NC | 13.5 U/1 g of starch | 14.4 | ○ | × × | ○ |
| | PG | 15 U/1 g of rice protein | | | | |

As shown in Examples 3 and 4 in Table 3, by treating the aqueous dispersion of crushed rice with PG, the smoothness was remarkably improved as compared with the case where no enzyme treatment was performed (Comparative Example 3) and the case where a treatment was performed with $\alpha$-amylase, which is a saccharifying enzyme (Comparative Example 4). In addition, as shown in Table 3, comparing Examples 3 and 4, in Example 3 in which the treatment with $\alpha$-amylase was not performed, the viscosity was also remarkably enhanced, and a strong body was felt. That is, the rice milk of Example 3 achieved a creamy texture due to remarkably improved smoothness and a strong body. As shown in Fig. 2, Example 4 and Example 4 were semitransparent, Comparative Example 3 was opaque, and Example 3 was gelled and had high opacity in appearance; that is, the characteristics of the viscosity were also reflected in the appearance. As shown in Examples 3 and 4, by treating the aqueous dispersion of crushed rice with PG, the rice odor of the raw material was also remarkably reduced.

**Claims**

1. A method for producing a rice protein-containing liquid composition, comprising a step of treating a rice protein-containing liquid material with a protein deamidase.

2. The method according to claim 1, wherein the rice protein-containing liquid material is an aqueous dispersion of crushed rice.

3. The method according to claim 1 or 2, not comprising a step of treating with a saccharifying enzyme.

4. The method according to any one of claims 1 to 3, not comprising a fermentation step.

5. A smoothness improver for a liquid composition containing a rice protein, comprising a protein deamidase.

6. A viscosifier for a liquid composition containing a rice protein, comprising a protein deamidase.

7. A rice odor reducer for a liquid composition containing a rice protein, comprising a protein deamidase.

FIG. 1

FIG. 2

Comparative
Example 4

Example 4

Comparative
Example 3

Example 3

## INTERNATIONAL SEARCH REPORT

| International application No. |
| --- |
| **PCT/JP2021/048039** |

| A. CLASSIFICATION OF SUBJECT MATTER |
| --- |
| *A23J 3/14*(2006.01)i; *A23L 2/00*(2006.01)i; *A23L 2/52*(2006.01)i; *A23L 2/38*(2021.01)i<br>FI: A23J3/14; A23L2/00 E; A23L2/00 B; A23L2/38 J |
| According to International Patent Classification (IPC) or to both national classification and IPC |

| B. FIELDS SEARCHED |
| --- |
| Minimum documentation searched (classification system followed by classification symbols)<br>A23J3/14; A23L2/00; A23L2/52; A23L2/38 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | CN 109287843 A (SOUTH CHINA UNIVERSITY OF TECHNOLOGY) 01 February 2019 (2019-02-01)<br>paragraphs [0004]-[0006], [0046]-[0056], examples, tables 1, 2 | 1-7 |
| X | JP 2010-522543 A (DSM IP ASSETS B.V) 08 July 2010 (2010-07-08)<br>claims 1, 5, 33, paragraphs [0131], [0178] | 1-4, 6 |
| A | | 5, 7 |
| A | JP 2009-219419 A (AJINOMOTO CO INC) 01 October 2009 (2009-10-01)<br>claims, examples | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 February 2022** | **01 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/048039**

| Patent document cited in search report | | | Publication date (day/month/year) | Patent family member(s) | Publication date (day/month/year) |
|---|---|---|---|---|---|
| CN | 109287843 | A | 01 February 2019 | (Family: none) | |
| JP | 2010-522543 | A | 08 July 2010 | US 2008/0241320 A1 claims 1, 5, 33, paragraphs [0162], [0211] EP 2131668 A1 KR 10-2009-0127896 A CN 101790320 A | |
| JP | 2009-219419 | A | 01 October 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5137545 A
- JP 2014180249 A
- JP 2000050887 A
- JP 2001218590 A
- WO 2006075772 A1
- WO 2015133590 A